Europäisches Patentamt

European Patent Office

Office européen des brevets

(19)

(11) Veröffentlichungsnummer: **0 056 469**
**B1**

(12) **EUROPÄISCHE PATENTSCHRIFT**

(45) Veröffentlichungstag der Patentschrift:
**19.06.85**

(21) Anmeldenummer: **81110495.9**

(22) Anmeldetag: **16.12.81**

(51) Int. Cl.⁴: **B 65 D 43/16,** E 05 D 1/02,
F 16 C 11/12

(54) **Schnappscharnier aus Kunststoff.**

(30) Priorität: **21.01.81 CH 360/81**

(43) Veröffentlichungstag der Anmeldung:
**28.07.82 Patentblatt 82/30**

(45) Bekanntmachung des Hinweises auf die Patenterteilung:
**19.06.85 Patentblatt 85/25**

(84) Benannte Vertragsstaaten:
**AT BE CH GB LI NL SE**

(56) Entgegenhaltungen:
**CH - A - 488 085**
**DE - A - 1 808 875**
**FR - A - 1 595 023**
**US - A - 3 135 456**
**US - A - 3 616 487**

(73) Patentinhaber: **ZELLER PLASTIK Koehn, Gräbner & Co.,**
**Auf dem Barl Postfach 1120, D-5583 Zell/Mosel (DE)**

(72) Erfinder: **Wiesinger, Wilhelm, Köchlistrasse 2,**
**CH-8004 Zürich (CH)**

(74) Vertreter: **Schroeter, Helmut et al, PATENTANWÄLTE**
**HELMUT SCHROETER KLAUS LEHMANN**
**Bocksgasse 49, D-7070 Schwäbisch Gmünd (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung bezieht sich auf ein einteiliges Schnappscharnier aus Kunststoff mit den im Oberbegriff von Anspruch 1 genannten Merkmalen.

Schnappscharniere dieser Art sind aus der Schrift DE-A-1 808 875 bekannt. Danach sind die beiden Scharnierteile durch ein Filmscharnier miteinander verbunden, in das die geometrische Hauptachse fällt. Die Zwischenelemente haben die Form einer Biegefeder, die beim Schnappvorgang Kräfte auf die beiden Scharnierteile ausübt, derart, daß sie aus einer labilen Gleichgewichtslage heraus entweder in die Offenstellung oder in die Schließstellung gedrückt werden. Die federnden Zwischenelemente sind mit Hilfe zweier weiterer Filmscharniere oder Dünnstellen mit den Scharnierteilen gelenkig verbunden. Die Achsen aller drei Filmscharniere verlaufen parallel zueinander.

Ein bekanntes Anwendungsgebiet für Schnappscharniere dieser Art sind Flaschenverschlüsse, die einteilig mit den Scharnieren im Spritzguß hergestellt werden. Ausführungsformen nach der genannten Schrift sind zwar auf Verschlüsse anwendbar, bedingen aber je einen relativ großen Ausschnitt in beiden Scharnierteilen, der zur Unterbringung des federnden Zwischenelements (dort 16) dient. Das federnde Zwischenelement muß also durch Schlitze, die quer zu den Achsen verlaufen, von beiden Scharnierteilen getrennt werden.

Durch die Ausschnitte, die zur Unterbringung des federnden Zwischenelements eine erhebliche Länge haben müssen, wird die Festigkeit des Schnappscharniers beeinträchtigt. Es läßt sich relativ leicht dadurch zerstören, daß man den einen Scharnierteil gegenüber dem anderen um eine Achse quer zur Hauptachse verdreht.

Bei einem Schnappscharnierverschluß für Flaschen oder dergleichen ist der auf die Mündung zu setzende Unterteil im allgemeinen oben durch eine Kopfplatte abgeschlossen, die eine Ausgieß- oder Ausspritzöffnung enthält. Die zur Unterbringung des federnden Zwischenelements in Deckel und Unterteil erforderlichen Ausschnitte müssen eine erhebliche Länge haben. Würde man die Ausschnitte weglassen, so müßten die mit der Hauptachse zusammenfallenden Filmscharniere, die die beiden Scharnierteile miteinander gelenkig verbinden, an Vorsprüngen relativ weit nach außen vorstehen. Dies würde einerseits einen unbefriedigenden ästhetischen Eindruck machen, andererseits das Aufschrauben oder Aufprellen mit Hilfe herkömmlicher Verschließmaschinen unmöglich machen. Man müßte Sondermaschinen einsetzen.

Der im Unterteil vorhandene Ausschnitt ragt ein Stück in die Kopfplatte hinein. Dies schränkt aber die Gestaltungsmöglichkeiten für Verschlüsse ein. Man kann keine Verschlüsse herstellen, die im Vergleich zum Gesamtdurchmesser relativ große Ausgießöffnungen und zugehörige Teile haben.

Schließlich machen Schnappscharniere nach der genannten Schrift, besonders bei ihrer Anwendung auf Flaschenverschlüsse, einen technischen Eindruck. Sie entsprechen daher oft nicht den ästhetischen Anforderungen, die, z. B. von der kosmetischen Industrie, an Verpackungen gestellt werden.

Die bekannten Schnappscharniere sind als integrierte Scharniere für Tiefziehpackungen aus den folgenden Gründen nicht verwendbar: Der Ausschnitt würde die Festigkeit der Packung beeinträchtigen. Der ausgestanzte Abfall würde erhebliche Produktionsstörungen hervorrufen. Bei einigen Anwendungsfällen würde der Ausschnitt als Loch in der Packung stören.

Die Schrift US-A-3 135 456 befaßt sich mit dem Problem, ein Scharnier für runde Behälter zu schaffen. Dort wird vorgeschlagen, einen oder zwei Streifen aus flexiblem Material an den gekrümmten Seitenflächen von Unterteil und Deckel des Behälters zu befestigen, wobei der oder die Streifen kurvenförmige Dünnstellen haben, die ein Zwischenelement eingrenzen. Hier ist kein in die geometrische Hauptachse fallendes Filmscharnier vorgesehen. In der Schrift wird keine Lehre gegeben, wie die gezeigten Scharniere so ausgestaltet werden können, daß ein einwandfreier Schnappvorgang erzielbar ist, bei dem aus einer Lage labilen Gleichgewichts heraus der Deckel gegenüber dem Unterteil entweder in die Offenstellung oder in die Schließstellung schnappt und dann dort verharrt.

Durch die vorliegende Erfindung soll ein Schnappscharnier geschaffen werden, das einteilig aus Kunststoff hergestellt werden kann und das demgemäß Bestandteil eines Verschlusses, einer Tiefziehpackung oder anderer Kunststoffartikel sein kann. Dabei soll das Schnappscharnier widerstandsfähig sein gegen mechanische Beschädigung, auch gegen eine Verdrehung eines der Scharnierteile gegenüber dem anderen quer zur geometrischen Hauptachse. Ein mit dem Schnappscharnier ausgestatteter Gegenstand, insbesondere Flaschenverschluß, soll einen ästhetisch befriedigenden Eindruck machen. Insbesondere sollen nach außen keine Teile nennenswerter Größe vorstehen, so daß Flaschenverschlüsse auf serienmäßigen Verschließmaschinen ohne Sondervorrichtungen an Flaschenmündungen befestigt werden können.

Die Flächen, die für die eigentliche Funktion der durch das Scharnier verbundenen Teile zur Verfügung stehen, sollen wenig oder gar nicht durch Scharnierteile eingeschränkt werden. So soll beispielsweise bei Verschlüssen die gesamte Kopffläche des Unterteils für eine Entnahmeöffnung ausgenutzt werden können.

All dies zugleich wird durch ein Schnappscharnier nach Anspruch 1 erreicht. (Im folgenden wird auf den Wortlaut der Ansprüche Bezug genommen.) Der Ausdruck »geometrische« Hauptachse soll bedeuten, daß nicht über die ganze Länge dieser Hauptachse ein Filmscharnier vorhanden zu sein braucht.

Die für den Schnappvorgang notwendige Federwirkung kann durch federnde Ausbildung des Zwischenelements, der Zwischenelemente oder anderer Bestandteile des Schnappscharniers, z. B. eines oder beider Scharnierteile erzielt werden. Wesentlich ist, daß die Dünnstellen, die die Zwischenelemente mit den Scharnierteilen verbinden, nicht parallel zueinander verlaufen, sondern auseinanderlaufen, so daß die Zwischenelemente eine ebene oder gekrümmte Dreieckfläche bedecken. Die notwendige Stabilität und Symmetrie wird dadurch erzielt, daß zumindest ein derartiges Zwischenelement vorgesehen ist sowie eine weitere gelenkige Verbindung in Form eines Filmscharniers, das in die geometrische Hauptachse fällt. Vorzugsweise werden nicht nur ein, sondern zwei oder mehr Zwischenelemente vorgesehen, die durch Dünnstellen mit den Scharnierteilen verbunden sind. Zum Beispiel können an einer langgestreckten Schachtel mehrere Paare von Zwischenelementen vorhanden sein. Ein Filmscharnier, das zwischen den spitzen Enden von zwei Zwischenelementen angeordnet ist, kann eine sehr geringe Länge haben.

Zwei Zwischenelemente der genannten Art sind auch dann vorhanden, wenn sie mit ihren weiten Enden ineinander übergehen und gemeinsam einen Rhombus bilden. Soll ein Schnappscharnier relativ lang sein, sich z. B. an einer langgestreckten Schachtel befinden, so können mehr als zwei derartige Zwischenelemente vorgesehen sein, insbesondere mehrere Paare von Zwischenelementen.

Bei einem Schnappscharnier nach der Erfindung ist ein Ausschnitt in dem einen oder beiden Scharnierteilen nicht mehr erforderlich. Andererseits können die auseinanderlaufenden Dünnstellen eine größere Länge haben als die Filmscharniere vorbekannter Schnappscharnierverschlüsse. Aus beiden Gründen wird die Widerstandsfähigkeit gegen unbeabsichtigte Zugbelastungen und Verdrehungen erhöht. Durch den wegfallenden Ausschnitt erhält der Konstrukteur mehr Gestaltungsfreiheit. Das Schnappscharnier vermittelt einen ästhetisch befriedigenden Eindruck. Die Zwischenelemente lassen sich so ausbilden und anordnen, daß sie bei Anwendung auf einen Verschluß nach außen nicht oder nur in verschwindend geringem Maße vorstehen.

Schnappscharniere nach der Erfindung lassen sich so ausbilden, daß eine Lage labilen Gleichgewichts (Totpunktlage) in den normalen Klappweg fällt. Dann sorgt die Federung beiderseits der labilen Gleichgewichtslage für ein Aufschnappen bzw. ein Zuschnappen. Die labile Gleichgewichtslage kann durch konstruktive Maßnahmen aber auch so angeordnet werden, daß die Scharnierteile nur aufschnappen oder zur zuschnappen.

Die Anwendung des Scharniers nach der Erfindung ist nicht auf Packmittel begrenzt. Es sind viele Einsatzmöglichkeiten denkbar, z. B. in der Elektroindustrie, der Elektronik, der Automobilindustrie, der Möbelindustrie etc.

Das Scharnier kann auch als unabhängiger Bauteil hergestellt werden, der jeweils später mit einem bestimmten Produkt zusammengefügt wird. Ein Beispiel: Möbeltürscharniere.

Zwischenelemente nach Anspruch 6 in Form sich erweiternder Rinnen sind für die Herstellung von Flaschenverschlüssen besonders geeignet. Die Rinnen können veshiedene Querschnittsformen haben und können, je nach Form des Verschlusses, bei geschlossenem Verschluß nach innen oder nach außen weisen, wobei immer die Möglichkeit gegeben ist, sie konstruktiv innerhalb der Außenkontur des Verschlusses unterzubringen.

Nach Anspruch 11 können die Zwischenelemente als Zugelemente ausgebildet sein, die selbst keine Federwirkung zu haben brauchen, während mindestens einer der Scharnierteile in der Nachbarschaft der geometrischen Hauptachse federnd ausgebildet ist. Auch auf diese Weise läßt sich die erwünschte Schnappwirkung erzielen.

Nach Anspruch 13 läßt sich die Erfindung auf die Herstellung von Schnappscharnieren für Tiefziehpackungen anwenden. Um zu verhindern, daß das tiefgezogene Material — z. B. PVC oder Polystyrol — an den Biegestellen bricht, können die Zwischenelemente mindestens zwei tiefgezogene Rinnen haben, von denen jede einen Teil der bei einem Schnappvorgang erforderlichen Umlenkung übernimmt.

Werden nach Anspruch 17 dort, wo die weiten Enden zweier Zwischenelemente zusammenstoßen, Rippen vorgesehen, die quer zur Hauptachse verlaufen, so erhält man auch dort mindestens eine Biegerinne. Hierdurch wird den beiden Zwischenelementen des oder jedes Paares eine Schnappbewegung quer zur Hauptachse ermöglicht oder erleichtert, so daß z. B. bei geschlossener Packung die querverlaufenden Rippen etwas in die Packung hineingeschnappt, bei geöffneter Packung dagegen nach außen geschnappt sind.

Ausführungsbeispiele der Erfindung werden im folgenden anhand der Zeichnungen beschrieben.

Fig. 1 bis 3 zeigen perspektivisch bzw. in Draufsicht auf einen geöffneten Verschluß eine erste Ausführungsform mit Zwischenelementen, die Biegefedern sind und als U-förmige Rinnen ausgebildet sind.

Fig. 4 und 5 zeigen perspektivisch eine zweite Ausführungsform eines Schnappscharniers mit ähnlich gestalteten Biegeelementen, die jedoch die Scharnierteile nicht über einen Totpunkt bewegen, sondern lediglich aufschnappen lassen.

Fig. 6 und 7 zeigen im Axialquerschnitt eine dritte Ausführungsform eines Schnappscharniers, bei dem die Zwischenelemente ähnlich ausgebildet sind, wie bei der ersten Ausführungsform, jedoch nach außen statt nach innen weisen.

Fig. 8 bis 12 zeigen Varianten der ersten bis dritten Ausführungsform.

Fig. 13 und 14 zeigen die Anordnung von zwei Paaren von federnden Zwischenelementen in Gestalt V-förmiger Rinnen an einer Schachtel mit Schnappdeckel.

Fig. 15 bis 18 zeigen eine vierte Ausführungsform, bei der die Zwischenelemente ebene Zugelemente sind, während die Federung von der Wandung eines der Scharnierteile übernommen wird.

Fig. 19 bis 22 zeigen eine fünfte Ausführungsform, nämlich eine mit einem Schnappscharnier ausgerüstete Tiefziehpackung, Fig. 19 und 20 perspektivisch in Schließ- bzw. Offenstellung, während Fig. 22 eine Draufsicht auf die geöffnete Packung ist und Fig. 21 ein Querschnitt nach Linie XXI-XXI in Fig. 22.

## Erste Ausführungsform

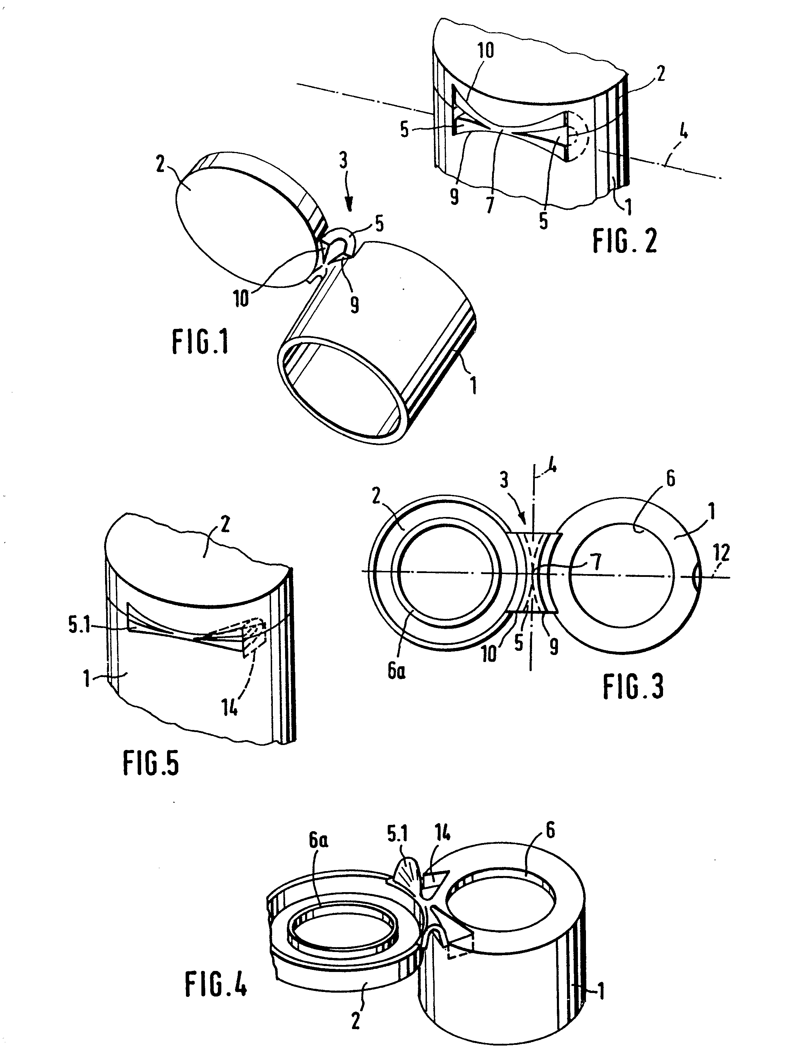

Fig. 1 bis 3 zeigen ein als Ganzes mit 3 bezeichnetes Schnappscharnier, das einteilig mit einem Flaschenverschluß z. B. aus Polypropylen gespritzt ist. Das Schnappscharnier hat zwei Scharnierteile 1 und 2, von denen der Scharnierteil 1 als Unterteil eines Flaschenverschlusses zum Aufsetzen auf einen Flaschenhals ausgebildet ist, während der Scharnierteil 2 einen Deckel zum Verschließen des Unterteils bildet. Die geometrische Hauptachse ist mit 4 bezeichnet. Der Unterteil (1) hat eine weite Entnahmeöffnung 6, der Scharnierteil 2 eine dazu passende ringförmige Dichtlippe 6a.

Dieses Scharnier hat zwei Zwischenelemente 5, die als im Querschnitt etwa U-förmige Rinnen ausgebildet sind. Beide Zwischenelemente verjüngen sich in Richtung der Hauptachse 4 bis zu einem sehr kurzen Filmscharnier 7, das in der Hauptachse 4 und in einer quer dazu angeordneten Symmetrieebene 12 (Fig. 3) liegt.

Die Zwischenelemente 5 sind durch Dünnstellen 9 und 10 mit den beiden Scharnierteilen 1 und 2 verbunden. Jede der Dünnstellen 9, 10 ist vom linken, weiten Ende des linken Zwischenelements 5 (Fig. 2) bis zum rechten, weiten Ende des rechten Zwischenelements 5 durchgehend ausgebildet. Jede beschreibt eine räumliche Kurve, die einerseits von der Seite gesehen etwa einen Kreisbogen beschreibt, andererseits ganz oder nahezu in die Zylinderwandung des Verschlusses fällt.

Das beide Scharnierteile miteinander direkt verbindende Hauptscharnier in Form des Filmscharniers 7 hat eine verschwindend kleine Länge. Es geht nahtlos in die beiden Dünnstellen 9, 10 über. Die Zwischenelemente 5 sind hier als im Querschnitt U-förmige Biegefedern ausgebildet. Werden die Scharnierteile aus der Lage nach Fig. 1 in die Lage nach Fig. 2 bewegt, so werden die Zwischenelemente 5 etwas aufgebogen, bis die Scharnierteile eine labile Gleichgewichtsstellung (Totpunkt) einnehmen. Von da an haben die Zwischenelemente die Tendenz, wieder zusammenzufedern und die Scharnierteile in Schließstellung zu drücken.

Bei dieser Ausführungsform weisen die federnden Zwischenelemente 5 bei offenem Verschluß nach oben (Fig. 1), während sie bei geschlossenem Verschluß in dessen Inneres hineinragen (Fig. 2). Es stehen keine Teile nach außen vor, und es wird ein ästhetisch befriedigender Eindruck erzielt. Durch die Länge der Dünnstellen 9, 10 ergibt sich ein mechanisch stabiles Gebilde, das auch durch Verdrehen des einen Scharnierteils gegenüber dem anderen, insbesondere bei geöffnetem Verschluß, nur schwer zu beschädigen ist.

## Zweite Ausführungsform

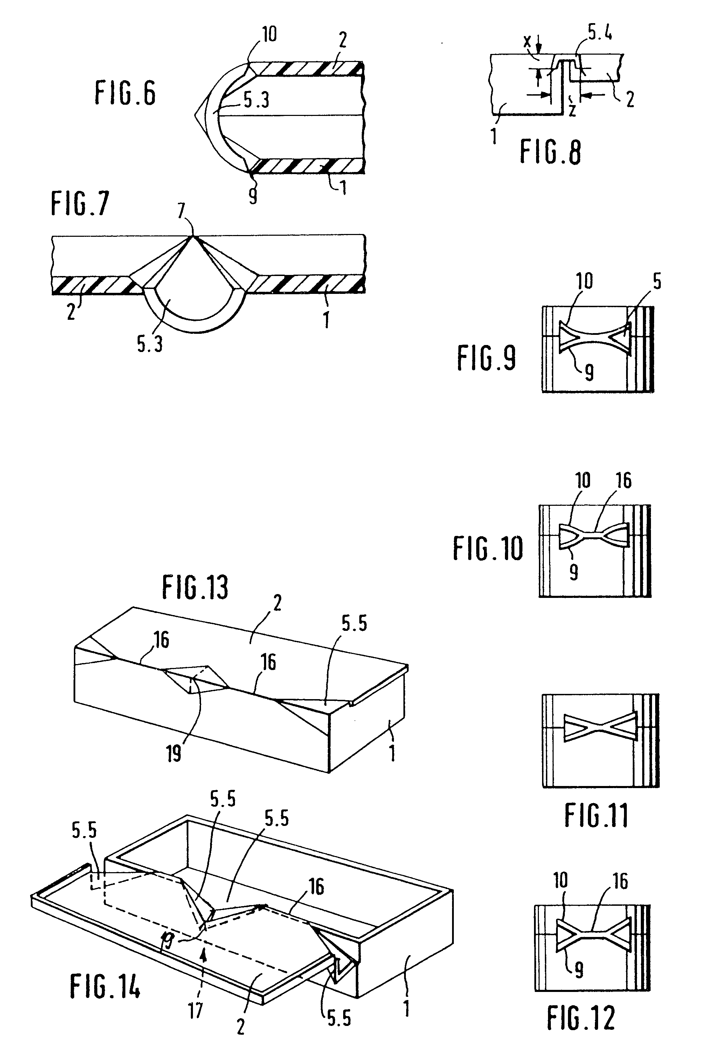

Fig. 4 und 5 zeigen einen Verschluß mit einem Schnappscharnier, das den Deckel lediglich aufschnappen läßt. Während bei der ersten Ausführungsform die Zwischenelemente 5 in beiden Endstellungen entspannt sind, sind die Zwischenelemente 5.1 hier nur in Offenstellung nach Fig. 4 entspannt, dagegen in Schließstellung nach Fig. 5 maximal zusammengedrückt. Der Deckel wird durch eine beliebige Rastvorrichtung, z. B. Entnahmeöffnung 6 und Dichtlippe 6a, in Schließstellung gehalten. Nach dem Lösen der Rastvorrichtung springt er von selbst in eine Lage auf, die (möglicherweise wegen der Langzeitverformung (Kaltfluß)) einem Öffnungswinkel zwischen 90° und 180° entspricht. Im Scharnierteil 1, dem Unterteil, sind Vertiefungen 14 vorgesehen, die zur Aufnahme der zusammengedrückten Zwischenelemente 5.1 dienen.

## Dritte Ausführungsform

Bei der Ausführungsform nach Fig. 6 und 7 sind die Zwischenelemente 5.3 wiederum als Biegefedern ausgebildet, wölben sich im Schließzustand aber nicht, wie bei Fig. 2, in das Innere eines Gegenstandes, sondern nach außen und bei geöffneten Scharnierteilen (Fig. 7) nach unten. Im übrigen ist die Funktion die gleiche wie anhand des ersten Ausführungsbeispiels beschrieben. Es sind wiederum Dünnstellen 9 und 10 vorhanden und eine verschwindend kleine reelle Hauptachse beim Punkt 7.

## Varianten der ersten bis dritten Ausführungsform

Die federnden Zwischenelemente können, wie dargestellt, im Schnitt quer zur geometrischen Hauptachse 4 U-förmig sein, jedoch auch andere geometrische Formen, wie die eines Dreiecks, Rechtecks oder Vielecks haben. Fig. 8 zeigt eine Ausführungsform mit im Querschnitt rechteckigen Zwischenelementen 5.4. Zur Erzielung der gewünschten Auf- und Schnappwirkung und um zu erreichen, daß die Zwischenelemente 5.4 bei geschlossenem Scharnier möglichst vollständig in den beiden Scharnierteilen verschwinden, ist vorzugsweise die Höhe x innerhalb jedes Schnittes quer zur Hauptachse kleiner als die Breite z. Zur Erzielung des Formschlusses, der Vorspannung (resp. Schließspannung) sollte die Bedingung $2x \geq z$ erfüllt sein.

Die die Zwischenelemente begrenzenden Dünnstellen 9 und 10 können konkav (Fig. 9), konvex (Fig. 10) oder gerade verlaufen (Fig. 11 und 12). Darüber hinaus sind viele weitere Verlaufskombinationen möglich. Bei allen bisher beschriebenen Ausführungsbeispielen sind die spitzen Enden der Zwischenelemente gegeneinander gekehrt. Zwischen den spitzen Enden ist ein gerades Stück Hauptscharnier in Form eines Filmscharniers 16 vorgesehen, was besonders deutlich in Fig. 10 und 12 erkennbar ist. Die Dünnstellen 9 und 10 setzen sich als Hauptscharnier fort und teilen sich am entgegengesetzten Ende wieder in die beiden Dünnstellen 9 und 10 auf. Die Dünnstellen 9 und 10 können sich auch in der Weise fortsetzen, daß sie dicht nebeneinander herlaufen und dadurch ein Hauptscharnier oder Filmscharnier bilden, wie es Fig. 2, 5 und 9 zeigen.

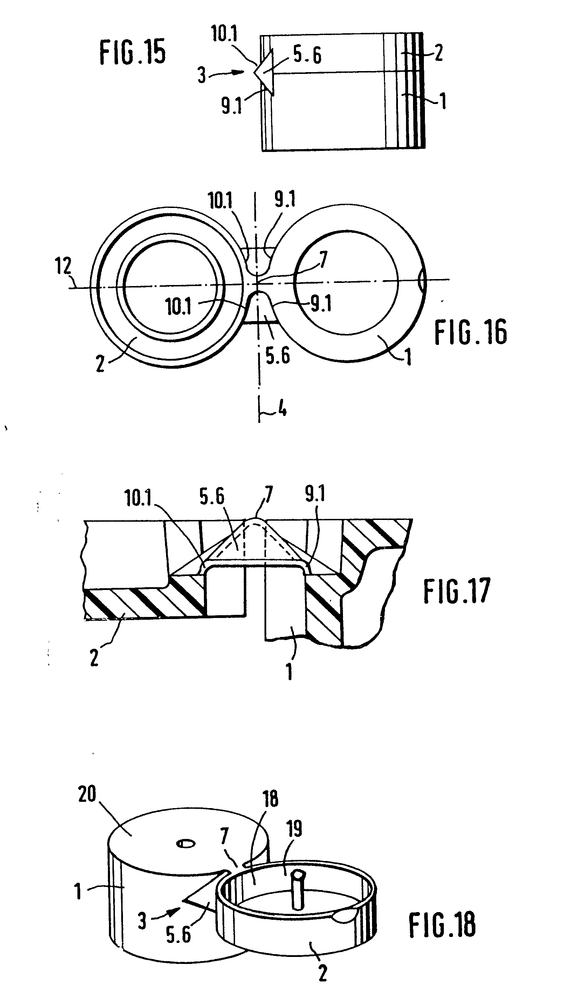

Bei allen bisher beschriebenen Ausführungsformen ist jeweils ein Paar von Zwischenelementen vorgesehen. Fig. 13 und 14 zeigen Schnappscharniere an einer Schachtel, die den Scharnierteil 1 bildet, mit einem Schnappdeckel, der den Scharnierteil 2 bildet. Gerade Filmscharniere 16 bilden Stücke eines Hauptscharniers. An den äußeren Enden der Scharnierachse sind federnde Zwischenelemente 5.5 vorgesehen, die im Querschnitt zur geometrischen Hauptachse V-förmig ausgebildet sind. Die beiden äußersten Zwischenelemente sind mit ihren weiten Enden nach außen gekehrt und bilden gemeinsam das eine Paar von Zwischenelementen. In der Mitte befindet sich hier ein weiteres Paar 17, das aus zwei Zwischenelementen besteht, die mit ihren weiten Enden gegeneinander gekehrt sind. Diese Zwischenelemente ragen bei geöffneter Schachtel nach außen, entsprechen also der Ausführungsform nach Fig. 6 und 7 und schmiegen sich im Schließzustand in die Rechteckform der Schachtel ein (Fig. 13).

Die beiden Zwischenelemente 5.5 des Paares 17 können voneinander durch einen quer zur geometrischen Hauptachse verlaufenden Schlitz 19 getrennt sein. Dieser erlaubt, insbesondere bei steifem Material, ein Auseinandertreten der beiden mittleren Zwischenelemente beim Öffnen der Schachtel.

Die Ausführungsform nach Fig. 13 und 14 läßt sich ferner so abwandeln, daß entweder die beiden äußeren Zwischenelemente oder die beiden in der Mitte angeordneten Zwischenelemente entfallen.

Die Zwischenelemente müssen nicht notwendigerweise paarweise angeordnet werden. Auch Anordnungen mit einer ungeraden Anzahl von Zwischenelementen längs der geometrischen Hauptachse sind möglich. Da eine gelenkige Verbindung in Form eines Filmscharniers 16 im Verlauf der Hauptachse vorgesehen ist, kann das Schnappscharnier auch mit nur einem Zwischenelement 5.5 versehen sein.

Schließlich können für bsondere Anwendungsfälle längs der geometrischen Hauptachse Öffnungen vorgesehen sein, die entweder zwischen den schmalen oder zwischen den weiten Enden der Zwischenelemente angeordnet sind.

### Vierte Ausführungsform

Bei der Ausführungsform nach Fig. 15 bis 18 sind die Zwischenelemente 5.6 Zugelemente, die entweder nicht oder nur geringfügig zugelastisch sind. Bei geöffnetem Verschluß sind die Zugelemente eben, bei geschlossenem Verschluß legen sie sich glatt an die Zylinderwandung des Verschlusses an, haben also dann eine Zylinderschalenform. Die Klappwirkung kommt hier dadurch zustande, daß die Wandung des Scharnierteils 2, also des Deckels, in der Nähe des Punktes 7, d. h. im Bereich 18, biegeelastisch ist. Beim Klappvorgang über eine labile Gleichgewichtslage kann entweder die Wandung im Bereich 18 radial einwärts gedrückt werden oder in weiter außen in Umfangsrichtung liegenden Bereichen, z. B. bei 19 radial auswärts gezogen werden. Es kann auch der Bereich 7 zwischen beiden Scharnierteilen gestaucht werden, oder es können sich mehrere dieser Effekte überlagern. In allen Fällen findet nach Durchgang durch die labile Gleichgewichtslage eine elastische Rückfederung statt.

Bei Anwendungsfällen, wo der Scharnierteil 1 nicht durch eine Kopfplatte 20 abgedeckt, sondern dort hohl ist, kann auch die Wandung des Scharnierteils 1 zur Federung mit herangezogen werden.

Wie Fig. 16 zeigt, gehen hier nicht die Dünnstellen 10.1 des Scharnierteils 2 ineinander über, ebensowenig die Dünnstellen 9.1 des Scharnierteils 1. Vielmehr geht die in Fig. 16 obere Dünnstelle 9.1 in einem Bogen in die Dünnstelle 10.1 über. Das gleiche gilt für die beiden unteren Dünnstellen.

Statt dessen können bei einer abgewandelten Ausführungsform die Dünnstellen einander kreuzen, so daß das in Fig. 16 obere Filmscharnier 9.1 in das untere Filmscharnier 10.1 geradlinig übergeht und entsprechend umgekehrt.

### Fünfte Ausführungsform

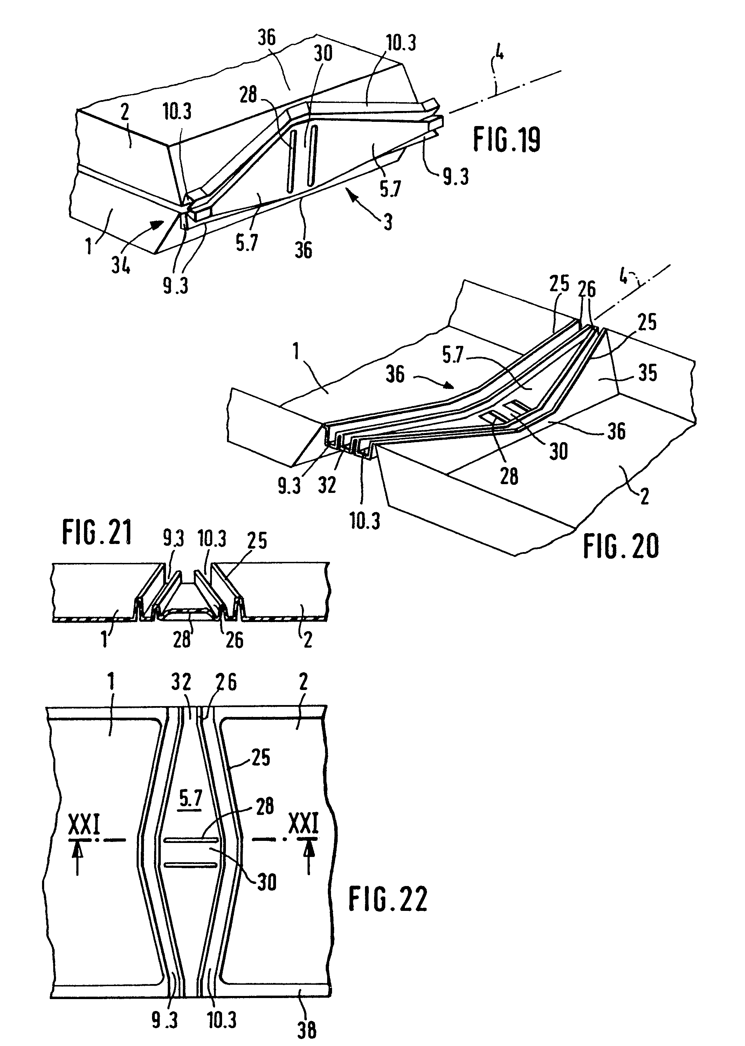

Die Fig. 19 bis 22 zeigen eine aus Tiefziehfolie, insbesondere Polystyrol tiefgezogene Packung. Die Tiefziehfolie kann eine erhebliche Stärke haben, während Filmscharniere und Dünnstellen meist wesentlich dünner sein müssen. Die Ausführungsform zeigt eine Möglichkeit, die erforderlichen Dünnstellen und Filmscharniere in mehrere zueinander parallele oder schwach geneigte Rinnen aufzuteilen. Die Packung wird in der Lage nach Fig. 20 und 22 tiefgezogen. Es sind wiederum zwei Scharnierteile 1 und 2 vorhanden, die hier die Hälften der Tiefziehpackung bilden. Es sind Zwischenelemente 5.7 vorgesehen, die mit ihren weiten Enden gegeneinander gekehrt sind und ohne Unterbrechung ineinander übergehen.

Die Funktion der Dünnstellen 9.3 und 10.3, die an ihren Enden Filmscharniere bilden, wird hier von tiefgezogenen Rinnen übernommen, deren Wandungen durch Rippen 25 und 26 gebildet werden. Die Rippen 25 gehen in die Wände 35 der Scharnierteile 1 und 2 über, die Rippen 26 in die Zwischenelemente 5.7.

Die Zwischenelemente 5.7 haben vorzugsweise kurz vor ihren weiten Enden, also nahe der Scharniermitte, je eine Rippe 28. Ein Paar solcher Rippen dient einerseits zur Querversteifung der Zwischenelemente, andererseits zur Bildung einer quer verlaufenden Zwischenfläche oder Biegerinne 30, die als Umlenkachse zwischen den beiden Zwischenelementen wirkt. Die Rinnen, die die Dünnstellen 9.3 und 10.3 bilden, verlaufen zueinander V-förmig bis zu den schmalen Enden 32 der Zwischenelemente.

Beim Zuklappen einer Tiefziehpackung aus der Lage nach Fig. 20 in die nach Fig. 19 übernehmen die Rinnen, die die Dünnstellen 9.3 und 10.3 und an ihren Enden 32 kurze Filmscharniere bilden, sowie die Rippen 25 und 26 je einen Teil der erforderlichen Biegung. Bei diesem Ausführungsbeispiel nehmen diese Rinnen, in der Richtung des Pfeils 34 betrachtet, im Schließzustand die Form eines Kleeblatts an.

Die federnde Schnappwirkung kommt hier durch Umklappen der Zwischenelemente 5.7 zustande. Hierbei übernehmen Bereiche 36 der Behälterwände in der Nähe der weiten Enden der Zwischenelemente die Federfunktion. In der Offenstellung nach Fig. 20 bilden die beiden Zwischenelemente 5.7 gemeinsam eine Art Dachfläche, deren First nach unten, d. h. nach der Außenseite der Packung weist. Beim Übergang in die Schließstellung schnappen beide Zwischenelemente einwärts. Es entsteht wiederum eine Art Dachfläche, deren First jedoch nun einwärts weist. Die Zwischenfläche 30 bildet ein Gelenk. Die Scharnierfunktion der Zwischenfläche 30 erleichtert die Schnappwirkung der Dachfläche.

Vorzugsweise sind zumindest die Wände 35 der Scharnierteile elastisch biegsam, so daß sie beim Umklappvorgang einen Teil der Federwirkung übernehmen.

Die Scharnierteile 1 und 2 der Tiefziehpackung können einen Flansch 38 haben, wie es nur Fig. 22 zeigt.

**Patentansprüche**

1. Einteiliges Schnappscharnier aus Kunststoff mit folgenden Merkmalen:

a) Zwei um eine geometrische Hauptachse (4) klappbare Scharnierteile (1, 2) sind über Dünnstellen (9, 9.1, 10, 10.1 usw.) mit mindestens einem Zwischenelement (5, 5.1 usw.) gelenkig verbunden,

b) die Scharnierteile (1, 2) sind außerdem über ein in die Hauptachse (4) fallendes Filmscharnier (7, 16) miteinander gelenkig verbunden,

dadurch gekennzeichnet, daß die ein Zwischenelement eingrenzenden Dünnstellen (9, 10 usw.) von einem gedachten Punkt aus, der auf der geometrischen Hauptachse (4) liegt, gerade oder gekrümmt auseinanderlaufen und schräg zur geometrischen Hauptachse verlaufen.

2. Schnappscharnier nach Anspruch 1, dadurch gekennzeichnet, daß (jeweils) zwei Zwischenelemente mit ihren schmalen, insbesondere spitzen Enden gegeneinander gekehrt sind.

3. Schnappscharnier nach Anspruch 1, dadurch gekennzeichnet, daß (jeweils) zwei Zwischenelemente mit ihren weiten Enden gegeneinander gekehrt sind.

4. Schnappscharnier nach Anspruch 3, dadurch gekennzeichnet, daß die weiten Enden der Zwischenelemente durch eine Materialdurchbrechung (19) voneinander getrennt sind (Fig. 14).

5. Schnappscharnier nach Anspruch 3, dadurch gekennzeichnet, daß die weiten Enden der Zwischenelemente durch mindestens eine Biegerinne (30) miteinander verbunden sind (Fig. 19).

6. Schnappscharnier nach einem der vorangehenden Ansprüche, dadurch gekennzeichnet, daß die Zwischenelemente Federn sind und die Form sich in Richtung der geometrischen Hauptachse erweiternder Rinnen haben (Fig. 1 bis 14, 19 bis 22).

7. Schnappscharnier nach Anspruch 6, dadurch gekennzeichnet, daß die Rinnen einen bogenförmigen Querschnitt haben (Fig. 1 bis 7).

8. Schnappscharnier nach Anspruch 6, dadurch gekennzeichnet, daß die Rinnen einen V-förmigen oder mehreckigen Querschnitt haben (Fig. 8, 13, 14, 19 bis 22).

9. Schnappscharnier nach einem der Ansprüche 6 bis 8, dadurch gekennzeichnet, daß die rinnenförmigen Zwischenelemente bei Anordnung des Schnappscharniers an einem verschließbaren Gegenstand, in Schließstellung in das Innere des Gegenstandes ragen (Fig. 1 bis 4).

10. Schnappscharnier nach einem der Ansprüche 6 bis 8, dadurch gekennzeichnet, daß die rinnenförmigen Zwischenelemente bei Anordnung des Schnappscharniers an einem verschließbaren Gegenstand, in Schließstellung des Gegenstandes nach außen weisen (Fig. 6, 7, 13, 14, 19 bis 22).

11. Schnappscharnier nach einem der Ansprüche 1 bis 5, gekennzeichnet durch folgende Merkmale:

a) Die Zwischenelemente (5.6) sind Zugelemente von geringer bis verschwindend kleiner Zugelastizität;

b) mindestens einer der Scharnierteile (1, 2) ist in der Nachbarschaft der geometrischen Hauptachse federnd, insbesondere biegeelastisch ausgebildet

(Fig. 15 bis 18).

12. Schnappscharnier nach Anspruch 11, dadurch gekennzeichnet, daß die Zwischenelemente eben sind (Fig. 15 bis 18).

13. Schnappscharnier nach einem der Ansprüche 1 bis 5, gekennzeichnet durch folgende Merkmale:

a)  Das Schnappscharnier besteht aus tiefgezogener, biegeelastischer Kunststoffolie;
b)  die Zwischenelemente (5.7) weisen je mindestens zwei tiefgezogene Rinnen auf, die die Dünnstellen (9.3, 10.3) bilden

(Fig. 19 bis 22).

14. Schnappscharnier nach Anspruch 13, dadurch gekennzeichnet, daß die Rinnen voneinander und von den Scharnierteilen durch Rippen (25, 26) getrennt sind.

15. Schnappscharnier nach Anspruch 14, dadurch gekennzeichnet, daß die Rinnen getrennt voneinander bis zu den schmalen Enden der Zwischenelemente verlaufen.

16. Schnappscharnier nach Anspruch 15, dadurch gekennzeichnet, daß die schmalen Enden (32) der Zwischenelemente in Rinnen auslaufen.

17. Schnappscharnier nach einem der Ansprüche 14 bis 16, dadurch gekennzeichnet, daß an den gegeneinander gekehrten weiten Enden der Zwischenelemente quer zur geometrischen Hauptachse verlaufende Rippen (28) vorgesehen sind.

## Claims

1. A one-piece snap hinge of plastic material with the following features:

(a)  Two hinge parts (1, 2), collapsible about a geometrical main axis (4), are hinge-connected by means of thin-spots (9, 9.1, 10, 10.1 etc.) to, at least, one intermediate element (5, 5.1 etc.);
(b)  the hinge parts (1, 2), in addition, are hinge-connected with each other by means of a film hinge (7, 16), falling into the main axis (4),

characterized in that the thin-spots (9, 10 etc.), limiting one intermediate element, from an imaginary point, situated on the geometrical main axis (4), diverge in astraight or curved manner and extend diagonally to the geometrical main axis.

2. Snap hinge according to claim 1, characterized in that (in each case) two intermediate elements are opposed to one another with their narrow, particularly acute, ends.

3. Snap hinge according to claim 1, characterized in that (in each case) two intermediate elements are opposed to one another with their wide ends.

4. Snap hinge according to claim 3, characterized in that the wide ends of the intermediate elements are separated from one another by a material opening (19) (Figure 14).

5. Snap hinge according to claim 3, characterized in that the wide ends of the intermediate elements are separated from one another by, at least, one bending groove (30) (Figure 19).

6. Snap hinge according to one of the preceding claims characterized in that the intermediate elements are springs and have the shape of grooves, enlarging in the direction of the geometrical main axis (Figures 1 through 14, 19 through 22).

7. Snap hinge according to claim 6, characterized in that the grooves have an arc-shaped cross-section (Figures 1 through 7).

8. Snap hinge according to claim 6, characterized in that the grooves have a V-shaped or multi-cornered cross-section (Figures 8, 13, 14, 19 through 22).

9. Snap hinge according to one of claims 6 through 8, characterized in that the groove-shaped intermediate elements, in case of arrangement of the snap hinge on a closable subject, in the closing position project into the interior of the subject (Figures 1 through 4).

10. Snap hinge according to one of claims 6 trough 8, characterized in that the groove-shaped intermediate elements, in case of arrangement of the snap hinge on a closable subject, in the closing position of te subject, are directed outwards (Figures 6, 7, 13, 14, 19 through 22).

11. Snap hinge according to one of claims 1 through 5, characterized by the following features:

(a)  The intermediate elements (5.6) are tension elements of low to infinitely small elasticity of tension;
(b)  at least, one of the hinge parts (1, 2) is provided springily, particularly bending-elastically, in the neighbourhood of the geometrical main axis

(Figures 15 through 18).

12. Snap hinge according to claim 11, characterized in that the intermediate elements are plane (Figures 15 through 18).

13. Snap hinge according to one of claims 1 through 5, characterized by the following features:

(a)  The snap hinge consists of deep-drawn, bending-elastical plastic foil;
(b)  the intermediate elements (5.7) comprise each, at least, two deep-drawn grooves, which form the thin-spots (9.3, 10.3)

(Figures 19 through 22).

14. Snap hinge according to claim 13, characterized in that the grooves are separated from one another and from the hinge parts by ribs (25, 26).

15. Snap hinge according to claim 14, characterized in that the grooves extend separately from one another to the narrow ends of the intermediate elements.

16. Snap hinge according to claim 15, characterized in that the narrow ends (32) of the intermediate elements end in grooves.

17. Snap hinge according to one of claims 14 through 16, characterized in that on the wide ends, directed to one another, of the intermediate elements ribs (28), extending transversely to the geometrical main axis, are provided.


**Revendications**

1. Charnière à déclic instantané d'une seule pièce en matière plastique présentant les particularités suivantes:

a) Deux parties rabattables formant charnières (1, 2) autour d'un axe géométrique principal (4) sont reliées par un genre d'articulation constituée par des parties amincies (9, 9.1, 10, 10.1 etc.) avec au moins un élément intermédiaire (5, 5.1, etc.);

b) les parties de charnière (1, 2) sont d'autre part assemblées par une articulation pelliculaire (7, 16) coincidant avec l'axe principal (4),

caractérisée par le fait que les parties amincies (9, 10 etc.) limitrophes d'un élément intermédiaire divergent suivant une ligne droite ou courbe et se situent en biais par rapport à l'axe géométrique principal (4), vu d'un point supposé être sur ce dernier.

2. Charnière à déclic instantané selon revendication 1, caractérisée par le fait que (chacun) deux éléments intermédiaires s'opposent par leurs extrémités étroites particulièrement en pointe.

3. Charnière à déclic instantané selon revendication 1 caractérisée par le fait que (chacun) deux éléments intermédiaires s'opposent par leurs extrémités évasées.

4. Charnière à déclic instantané selon revendication 3 caractérisée par le fait que les extrémités évasées des éléments intermédiaires sont séparées l'une de l'autre par une cassure de matériau (19) (figure 14).

5. Charnière à déclic instantané selon revendication 3 caractérisée par le fait que les extrémités évasées des éléments intermédiaires sont reliées au moins par une gorge flexible (30) (figure 19).

6. Charnière à déclic instantané selon l'une des revendications précitées caractérisée par le fait que les éléments intermédiaires sont des ressorts et qu'ils ont la forme de gorges allant s'élargissant en direction de l'axe géométrique principal (figure 1 à 14, 19 à 22).

7. Charnière à déclic instantané selon revendication 6 caractérisée par le fait que les gorges ont une section en arc de cercle (figures 1 à 7).

8. Charnière à déclic instantané selon revendication 6 caractérisée par le fait que les gorges ont une section en V ou polygonale (figures 8, 13, 14, 19 à 22).

9. Charnière à déclic instantané selon l'une des revendications 6 à 8 caractérisée par le fait que les éléments intermédiaires en forme de gorges ressortent à l'intérieur de l'objet en position fermée de celui-ci, lorsque la charnière à déclic instantané est montée sur un objet fermable (figure 1 à 4).

10. Charnière à déclic instantané selon l'une des revendications 6 à 8 caractérisée par le fait que les éléments intermédiaires en forme de gorges ressortent, dans le cas d'adaptation à un objet fermable, à l'extérieur de cet objet en position fermée de celui-ci (figures 6, 7, 13, 14, 19 à 22).

11. Charnière à déclic instantané selon l'une des revendications 1 à 5 caractérisée par les particularités suivantes:

a) Les éléments intermédiaires (5.6) sont des éléments dont l'élasticité à la traction est faible à minime;

b) au moins l'une des parties (1, 2) de charnière est réalisée, au voisinage de l'axe géométrique principal, de manière élastique et plus particulièrement élastique à la flexion

(figures 15 à 18).

12. Charnière à déclic instantané selon revendication 11 caractérisée par le fait que les éléments intermédiaires sont plats (figures 15 à 18).

13. Charnière à déclic instantané selon l'une des revendications 1 à 5 caractérisée par les particularités suivantes:

a) La charnière à déclic instantané est en feuille plastique emboutie élastique à la flexion;

b) les éléments intermédiaires (5.7) présentent chacun au moins deux gorges embouties qui constituent les parties amincies (9.3, 10.3)

(figures 19 à 22).

14. Charnière à déclic instantané selon revendication 13 caractérisée par le fait que les gorges sont séparées les unes des autres et des parties de charnière par des nervures (25, 26).

15. Charnière à déclic instantané selon revendication 14, caractérisée par le fait que les gorges sont disposées séparées les unes des autres jusqu'aux extrémités étroites des éléments intermédiaires.

16. Charnière à déclic instantané selon revendication 15, caractérisée par le fait que les extrémités étroites (32) des éléments intermédiaires débouchent dans des gorges.

17. Charnière à déclic instantané selon l'une des revendications 14 à 16 caractérisée par le fait qu'aux extrémités évasées opposées des éléments intermédiaires sont prévues des nervures (28) transversales à l'axe géométrique principal.

FIG. 2

FIG.1

FIG.3

FIG.5

FIG.4

FIG.6

FIG.7

FIG.8

FIG.9

FIG.10

FIG.11

FIG.13

FIG.14

FIG.12

FIG.15

FIG.16

FIG.17

FIG.18

FIG.19

FIG.20

FIG.21

FIG.22